(19) Europäisches Patentamt / European Patent Office / Office européen des brevets

(11) **EP 2 425 222 B1**

(12) **FASCICULE DE BREVET EUROPEEN**

(45) Date de publication et mention de la délivrance du brevet:
**01.01.2014 Bulletin 2014/01**

(21) Numéro de dépôt: **10727077.9**

(22) Date de dépôt: **30.04.2010**

(51) Int Cl.:
**_G01K 11/00_** _(2006.01)_

(86) Numéro de dépôt international:
**PCT/FR2010/050831**

(87) Numéro de publication internationale:
**WO 2010/125322 (04.11.2010 Gazette 2010/44)**

(54) **DISPOSITIF D'IMAGERIE RADIOMETRIQUE PORTABLE, ET PROCEDE D'IMAGERIE CORRESPONDANT**

**TRAGBARE RADIOMETRISCHE ABBILDUNGSEINRICHTUNG, UND ENTSPRECHENDES ABBILDUNGSVERFAHREN**

PORTABLE RADIOMETRIC IMAGING DEVICE, AND CORRESPONDING IMAGING METHOD

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **30.04.2009 FR 0952890**

(43) Date de publication de la demande:
**07.03.2012 Bulletin 2012/10**

(73) Titulaire: **Microwave Characterization Center 59650 Villeneuve d'Ascq (FR)**

(72) Inventeurs:
• WERQUIN, Matthieu
  F-59790 Ronchin (FR)
• THOUVENIN, Nicolas
  59155 Faches Thumesnil (FR)
• VANDENBROUCK, Simon
  85521 Ottobrunn München (DE)
• GAQUIERE, Christophe
  F-59650 Villeneuve d'Ascq (FR)
• BUE-ERKMEN, Frédéric
  F-59000 Lille (FR)
• VELLAS, Nicolas
  F-59250 Halluin (FR)

(74) Mandataire: **Balesta, Pierre Cabinet Beau de Loménie Immeuble Eurocentre 179 Boulevard de Turin 59777 Lille (FR)**

(56) Documents cités:
**EP-A1- 1 923 679        WO-A2-2007/054685
US-A1- 2006 049 980**

**EP 2 425 222 B1**

**Description**

La présente invention a pour objet un dispositif d'imagerie radiométrique portable, ainsi qu'un procédé d'imagerie correspondant. Elle trouve notamment une application à la détection d'objets portés par des passagers ou contenus dans des bagages, dans des lieux tels que des aéroports ou des gares.

Les questions de sécurité, par exemple en raison des risques d'attentat, sont des questions importantes dans les pays du monde entier.

Un certain nombre de système de détection ont été développés ou sont en cours de développement, comme des portiques d'aéroport utilisant la radiométrie afin de détecter n'importe quels objets (métalliques ou non) portés par des passagers, les systèmes d'imagerie infrarouge, les systèmes de détection bactériologiques (chromatographe, spectromètre).

Tous ces systèmes présentent des performances différentes suivant leur technologie mais sont encore très onéreux et volumineux.

En effet, il n'existe pas de dispositif portable de vérification des bagages, qui permettrait par exemple de cartographier le contenu des bagages laissés sans surveillance dans les lieux publics, les gares ferroviaires ou routières, les aires de repos sur autoroute, les halls d'aéroport, le métro, etc...

Lorsqu'un bagage suspect est découvert dans un lieu public à forte affluence, les services de sécurité (démineurs) spécialisés sont contactés pour intervenir. Les temps d'intervention peuvent être longs à cause de la disponibilité de ces services, de la complexité d'intervention (localisation intra ou extra muros). Ces perturbations du trafic sont, aujourd'hui, un facteur de mécontentement des usagés ainsi qu'une perte financière importante.

La présence de tels bagages dans les gares ferroviaires par exemple, génère ainsi une paralysie totale du trafic pendant plusieurs minutes, voire plusieurs heures et entraîne par conséquent un bouleversement général du trafic sur les lignes.

Afin de réduire, voire d'éliminer, ces perturbations, il est donc nécessaire de pouvoir utiliser un dispositif d'imagerie portable permettant de réaliser sur site, une image du contenu des bagages ou colis suspects sans avoir à y toucher.

On s'intéresse dans la présente invention aux dispositifs dits radiométriques.

Le principe de tels dispositifs est basé sur la mesure radiométrique en champ lointain.

La radiométrie est un terme assez large qui désigne la mesure de l'intensité du rayonnement électromagnétique, qu'il soit ionisant ou non ionisant.

Un rayonnement ionisant possède suffisamment d'énergie pour arracher des électrons aux atomes ou aux molécules lorsqu'il frappe ou traverse une substance (par exemple : des rayons X et y, particules a et β).

Par opposition, un rayonnement non ionisant présente une énergie faible (par exemple : ondes hertziennes, les micro-ondes, lumière visible...).

Le principe d'un dispositif radiométrique est donc basé sur la détermination de la grandeur physique « température ». Le principe physique mis en oeuvre pour ce type de mesure est le rayonnement électromagnétique d'origine thermique qu'émet tout corps dont la température est différente de zéro kelvin. L'intérêt principal de telles mesures est qu'elles sont non invasives sur des profondeurs bien plus élevées que celles de l'infrarouge.

Ainsi, tout corps dont la température physique est différente de zéro kelvin va émettre une puissance de bruit dans des directions de l'espace imposées par sa topologie.

L'objet de l'invention est donc de proposer un dispositif radiométrique qui permet aux personnels de sécurité qualifiés des gares, des aéroports, etc..., de visualiser le contenu de ces bagages sans prendre de risque, et de constater par eux-mêmes leur dangerosité.

Cet outil permet d'intervenir rapidement tout en consolidant l'aspect sécurité. Il pourrait être utilisé également par les démineurs dans leurs interventions quotidiennes sur site pour identifier, entre autres, le type d'explosif, le mécanisme de déclenchement d'une bombe, en limitant considérablement les risques.

L'un des plus importants problèmes liés au développement d'un tel outil concerne le conflit entre portabilité du dispositif et résolution spatiale de l'image

Ainsi, la méthode d'élaboration d'une image de résolution correcte pose des difficultés concernant notamment le nombre et le type d'antennes, la sensibilité radiométrique, le temps de réalisation d'une image, la profondeur d'investigation, la méthode de calibrage de chaque canal, etc...

Par ailleurs, le dispositif recherché doit être capable de détecter des objets de très petite taille en mesurant la puissance de bruit émise.

En outre, le dispositif doit présenter une sensibilité la plus faible possible afin de détecter des variations de température les plus faibles possibles.

L'objet de l'invention est donc d'apporter une solution à tout ou partie de ces problèmes, en proposant un dispositif d'imagerie radiométrique portable, sensible et à haute résolution spatiale.

L'invention se rapporte donc à un dispositif d'imagerie radiométrique portable.

Le dispositif comprend au moins deux antennes de réception aptes à capter les rayonnements électromagnétiques respectivement d'un premier et d'un deuxième points d'un corps ou d'un objet, et à les transformer en un premier et un deuxième signal représentatifs de ces rayonnements.

Le dispositif comprend également deux modules de réception respectivement associés aux deux antennes, et aptes à recevoir respectivement les premier et deuxième signaux représentatifs des rayonnements, et à les transformer respectivement en un premier et un deuxième signal électrique.

Le dispositif comprend encore une unité de traitement numérique apte à créer, à partir des premier et deuxième signaux électriques, un ou plusieurs signaux numériques représentatifs des rayonnements électromagnétiques, et destiné(s) à être affiché(s) par un afficheur en tant qu'image du corps ou objet.

De façon caractéristique, les modules de réception comprennent un module d'abaissement de fréquence et le dispositif d'imagerie comprend au moins un module de déconvolution, apte à déconvoluer les premier et deuxième signaux électriques en sortie respectivement du premier et du deuxième module de réception. Le dispositif d'imagerie comprend en outre un module de corrélation apte à corréler les premier et deuxième signaux électriques déconvolués afin de former au moins un signal représentatif du rayonnement électromagnétique de l'intersection des premier et deuxième points du corps ou objet.

Ainsi, grâce au module de corrélation, le dispositif de l'invention présente un encombrement réduit, donc une meilleure portabilité, et offre une résolution spatiale importante dans l'image tout en diminuant la température de bruit du système.

L'intérêt majeur de l'invention concerne donc l'utilisation d'un module de corrélation, associé à deux antennes par l'intermédiaire de deux modules de réception.

Ce module de corrélation permet de réaliser le produit de corrélation des signaux provenant des deux antennes à travers leur circuit de réception associé auxquels viennent s'ajouter le bruit propre des circuits de réception.

De plus, les antennes, associées à un optique de focalisation commun à celles-ci, sont disposées de telle sorte qu'elles réceptionnent les signaux issus d'une surface de scène commune. Cette surface sera nominale si elle correspond par exemple à la moitié de la surface totale vue par une antenne. De ce fait, seuls les signaux issus de cette surface commune aux deux antennes sont corrélés.

Le produit de corrélation permet, par conséquent, de limiter la surface de scène observée à la surface commune vue par les deux antennes. Ainsi grâce à cette technique, la résolution spatiale est améliorée d'un facteur deux, sans balayage spatiale mécanique ou numérique.

De plus, étant donné que le bruit propre de chaque voie de réception est peu voire pas corrélé, alors la température de bruit du système après corrélation tend vers zéro. Par conséquent, le processus de corrélation permet de s'affranchir de la température de bruit de la chaîne, offrant ainsi plusieurs possibilités par rapport à une architecture de radiomètre usuelle, telles que :

- l'amélioration de la sensibilité radiométrique pour un même temps d'intégration,
- la diminution du temps d'intégration pour une même sensibilité radiométrique.

Des variantes de l'invention sont présentées ci-dessous, qui peuvent être considérées seules ou en combinaison quelconque.

Un des modules de réception, ou les deux, peuvent comprendre un module de transition. Ce module de transition comprend de préférence une diode d'injection de bruit connectée à un coupleur. Ce coupleur est de préférence connecté à un amplificateur faible bruit.

Le module d'abaissement de fréquence comprend de préférence un mélangeur millimétrique et un amplificateur faible bruit basse fréquence.

Les modules de réception et l'unité de traitement numérique peuvent être placés sur une même puce de semi-conducteur.

Le dispositif peut comprendre un module de conversion des premier et deuxième signaux électriques respectivement en un premier et un deuxième signal numérique. Le module de corrélation est alors un module de corrélation numérique des signaux numériques, de préférence alors intégré à l'unité de traitement.

En effet, afin de réaliser un balayage spatial sans affecter la sensibilité radiométrique et sans accroître la complexité des récepteurs, il est préférable de réaliser le produit de corrélation numériquement.

En jouant sur le décalage temporel du signal issu d'une antenne par rapport à celui issu d'une des antennes adjacentes, et en réalisant le produit de corrélation pour ce décalage temporel, la zone de recouvrement va être modifiée engendrant ainsi un balayage spatial.

L'intérêt du produit de corrélation numérique est au moins triple : il permet de réaliser le balayage spatial, de s'affranchir du bruit propre des récepteurs et de ne pas trop affecter le temps dédié à la mesure radiométrique.

L'architecture de radiomètre permettant de réaliser le produit de corrélation numériquement fonctionne tel qu'expliqué ci-après.

Chaque antenne est associée à son module de réception qui permet de transformer les signaux vectoriels analogiques perçus par l'antenne en des signaux vectoriels analogiques abaissés en fréquence.

Ces signaux sont, dans un premier temps, stockés en mémoire vive après avoir été numérisés afin de pouvoir être traités mathématiquement dans un deuxième temps.

La sensibilité du radiomètre numérique dépend de sa température de bruit propre et du nombre d'échantillons : $\delta T = T_{sys} / \sqrt{N}$.

L'amélioration de la sensibilité sera effectuée en augmentant le nombre d'échantillons. En d'autres termes, il est nécessaire de réaliser une mesure sur un temps donné afin d'accroître N et par conséquent la sensibilité.

Par exemple, si un convertisseur analogique-numérique (CAN) fonctionnant à 1 GS/s est utilisé, et que la mesure est réalisée sur 1/10 de seconde alors N sera égal à 100 millions d'échantillons.

Pour chaque module de réception, une moyenne vectorielle de ces 100 millions d'échantillons peut être réalisée dans l'espace fréquentiel et le résultat stocké en mémoire après un retour à l'espace temporel (résultat vectoriel contenant les notions de module et de phase).

Si la caméra portable possède une matrice de 7x7 antennes par exemple, alors les 49 modules de réception vont réaliser l'acquisition des signaux simultanément, soit un temps d'acquisition, de moyennage et de mise en mémoire de 1/10 de seconde au total pour toute la matrice.

Il faut noter que si la rapidité est recherchée contrairement à la sensibilité, alors le temps d'acquisition pourra être réduit et vice et versa.

Une fois l'acquisition réalisée, la mémoire vive de l'appareil contient un signal vectoriel numérique pour chaque module de réception, soit 49 signaux vectoriels au total.

A cet instant précis, l'image n'est pas encore reconstituée. Afin de réaliser un balayage spatial de la scène dans le but de pixéliser l'image, les signaux vectoriels numériques provenant de deux antennes adjacentes ayant observées une surface de la scène commune sont corrélés par voie mathématique.

La corrélation est réalisée pour différentes constantes de temps τ (décalage temporel entre les deux signaux) afin d'obtenir pour chaque valeur de τ un signal vectoriel numérique proportionnel à la puissance de bruit émise par une partie de la surface de la scène.

Ainsi, aucune mesure complémentaire n'est réalisée. Il s'agit uniquement d'un traitement mathématique appliqué aux résultats de mesures préalablement stockés en mémoire.

La discrétisation de la surface de la scène va dépendre des valeurs de délais τ pour lesquelles les produits de corrélation ont été réalisés.

Prenons un exemple concret : si la caméra se trouve à 1m de la scène, que les antennes sont espacées les unes des autres de 2 mm, et que la résolution spatiale recherchée dans le plan de la scène est de 5mm, alors, par simple calcul mathématique (vitesse de propagation + calcul géométrique), le délai à appliquer entre les deux signaux numériques sera de 42 fs.

Cette valeur est très faible et difficilement atteignable. En effet, le délai minimum qu'il est possible d'appliquer correspond au décalage temporel entre deux échantillons fixé par le taux d'échantillonnage des CAN. Si le taux est de 1GS/s, alors l'écart temporel entre deux échantillons est de 1 ns.

Or, il est nécessaire de rappeler que le module de réception peut être constitué d'un mélangeur millimétrique permettant un abaissement de fréquence. Si la fréquence du signal émis par la scène et reçu par l'antenne est de l'ordre de 100GHz (signal mono-harmonique) et que le mélangeur millimétrique permet un abaissement du signal mesuré à 1MHz, le rapport entre les fréquences des signaux avant et après abaissement atteint 100 000. Ce rapport correspond à une compression ou une dilatation du temps (suivant le sens de la conversion de fréquence).

En d'autre terme, si un décalage temporel numérique de 1 ns est réalisé sur le signal abaissé en fréquence, cela se traduira par un décalage temporel de 10 fs sur le signal avant abaissement. Par conséquent, l'abaissement de fréquence permet de réaliser des décalages temporels adéquats. Plus le taux d'abaissement sera important, plus la valeur de décalage temporel atteignable sera faible.

Comme cela est expliqué plus loin dans la description, ceci est vérifié pour un signal mono-harmonique. En revanche, pour bénéficier de l'impact de l'abaissement de fréquence avec des signaux de bruit multi-harmoniques, il est nécessaire de traiter mathématiquement les signaux préalablement au produit de corrélation.

L'introduction d'un module d'abaissement de fréquence permet d'utiliser des CAN à taux d'échantillonnage pas trop élevé (<1 GS/s). En revanche, si des CAN à taux d'échantillonnage supérieur à 200Gs/s sont disponibles, alors l'abaissement de fréquence n'a plus lieu d'être.

Afin que le produit de corrélation puisse être effectué entre les signaux issus de toutes les antennes voyant une surface commune de la scène, il est nécessaire que les mélangeurs des modules de réception présentent un signal d'oscillateur local synchrone, c'est-à-dire provenant de la même source. En résumé, 1/10 de seconde est accordé à la mesure et la pixellisation de l'image est effectuée à posteriori.

Par conséquent, cette solution est particulièrement adaptée à la réalisation d'un dispositif d'imagerie radiométrique portable et performant.

Alternativement, le module de corrélation peut être un module de corrélation analogique comprenant au moins un premier sous-module destiné à générer en sortie, à partir du premier signal électrique et du deuxième signal électrique déphasés, deux signaux correspondant respectivement à la somme et à la différence des deux signaux numériques en entrée.

L'invention se rapporte également à un procédé d'imagerie radiométrique.

Le procédé comprend une étape de réception et de transformation en signaux électriques, par au moins un premier et un deuxième modules de réception, respectivement d'un premier et d'un deuxième signal représentatifs des rayonnements d'un premier et d'un deuxième points d'un corps ou d'un objet captés par une première et une deuxième antennes.

Le procédé comprend également une étape de création par une unité de traitement numérique, à partir des premier et deuxième signaux électriques, d'au moins un signal numérique représentatif des rayonnements électromagnétiques et destiné à être affiché par un afficheur en tant qu'image du corps ou objet.

De façon caractéristique, l'étape de réception et de transformation comprend une étape d'abaissement de fréquence des signaux électriques et le procédé comprend en outre une étape de déconvolution des premier et deuxième signaux électriques. Le procédé comprend encore une étape de corrélation des premier et deuxième signaux électriques déconvolués afin de former au moins un signal représentatif du rayonnement électromagnétique de l'intersection des premier et deuxième points du corps ou objet.

Dans une première variante, les premier et deuxième signaux électriques sont convertis respectivement en un premier et un deuxième signal numérique par un module de conversion. L'étape de corrélation est alors une étape de corrélation numérique mise en oeuvre sur ces signaux numériques.

Le traitement mathématique des premier et deuxième signaux numériques avant corrélation, comme on le verra plus loin, permet de s'affranchir de l'impact de l'abaissement de fréquence et du filtrage induits par la chaîne de réception.

L'étape de corrélation numérique peut comprendre :

- au moins une étape de calcul, à partir des premier et deuxième signaux numériques, d'au moins un signal numérique de corrélation représentatif du rayonnement électromagnétique de l'intersection des premier et deuxième points du corps ou objet,
- au moins une étape de création par calcul d'au moins un troisième signal numérique représentatif du rayonnement électromagnétique d'une zone voisine du premier et/ou deuxième points,
- au moins une étape de calcul, à partir du premier et/ou du deuxième signal numérique et du troisième signal numérique, d'au moins un signal numérique de corrélation représentatif du rayonnement électromagnétique de l'intersection du premier et/ou du deuxième points du corps ou objet avec la zone voisine.

Par ailleurs, l'étape de création par calcul du troisième signal numérique représentatif du rayonnement électromagnétique de la zone voisine du premier et/ou deuxième points peut comprendre une étape de décalage temporel du premier et/ou deuxième signal numérique.

Dans une deuxième variante, l'étape de corrélation est une étape de corrélation analogique, mise en oeuvre directement sur les premier et deuxième signaux électriques. Cette étape génère alors au moins un signal électrique de sortie qui est converti en au moins un signal numérique par un module de conversion en vue d'un traitement par l'unité de traitement.

Dans ce cas, l'étape de corrélation peut comprendre une étape de création de deux signaux électriques correspondant respectivement à la somme et à la différence du premier signal électrique et du deuxième signal.

D'autres caractéristiques et avantages de l'invention apparaîtront plus clairement et de manière complète à la lecture de la description ci-après des variantes préférées de réalisation du dispositif et de mise en oeuvre du procédé, lesquelles sont données à titre d'exemples non limitatifs et en référence aux dessins annexés suivants.

- figures 1a, 1b : représentent schématiquement un exemple de détection du rayonnement électromagnétique des points d'un corps ou d'un objet ;
- figures 2a, 2b : représentent schématiquement la résolution de détection radiométrique du dispositif de l'invention, avec la mise en évidence des zones de recouvrement, dans l'exemple des figures 1a et 1b,
- figure 3 : représente schématiquement un premier exemple de dispositif selon l'invention,
- figures 4a, 4b : représentent schématiquement la résolution de détection radiométrique du dispositif de l'invention, et le procédé de corrélation numérique multiple a posteriori,
- figure 5: représente schématiquement un deuxième exemple de dispositif, non conforme à l'invention,
- figures 6a, 6b : représentent schématiquement un autre exemple de détection du rayonnement électromagnétique des points d'un corps ou d'un objet,
- figure 7 : représente schématiquement la résolution de détection radiométrique du dispositif de l'invention, avec la mise en évidence des zones de recouvrement, dans l'exemple des figures 6a et 6b,

- figure 8 : représente l'évolution du facteur d'abaissement d'un signal de bruit centré autour de 99,5 GHz et de bande passante 1 GHz, en fonction de la fréquence du signal en entrée du mélangeur,
- figure 9 : représente le résultat du produit de corrélation entre les signaux émis par la scène et perçus par deux antennes à bande passante égale à 10 GHz centrée autour de 95 GHz, sans abaissement de fréquence,
- figure 10 : représente le résultat du produit de corrélation entre les signaux émis par la scène et perçus par deux antennes à bande passante égale à 10 GHz centrée autour de 95 GHz, avec abaissement de fréquence échantillonné à 20 GS/s,
- figure 11 : représente les résultats des signaux temporels corrélés numériquement,
- figure 12 : représente l'impact de la déconvolution.

Le but d'un dispositif radiométrique est de mesurer la puissance de bruit générée par les objets.

Classiquement, dans un tel dispositif, une antenne reçoit la puissance de bruit rayonnée par un objet présent sur la scène, et présentant une certaine température. Cette puissance de bruit est transmise à un récepteur qui la transforme en une tension continue dont la valeur est proportionnelle à la température. Un étalonnage préalable ou in situ du système permet alors d'associer cette valeur de tension à la valeur réelle de la température de l'objet.

Lorsque la détection est de type analogique, la sensibilité d'un tel dispositif est inversement proportionnelle à la racine carrée du produit du temps d'intégration (durée de la mesure) de l'intégrateur par la bande passante du système :

$$\delta T = T_{sys} / \sqrt{(B\tau)}$$

avec

- $T_{sys}$ : température de bruit de la chaîne située entre l'antenne et le détecteur quadratique,
- B = bande passante du récepteur,
- $\tau$ = temps d'intégration de l'intégrateur.

Par conséquent, si l'on veut réduire la sensibilité sans augmenter considérablement le temps d'intégration, il faut un récepteur avec une bande passante la plus large possible, et associé à une température de bruit du système la plus faible possible.

Alors que les dispositifs connus cherchent à agir sur la bande passante B et le temps d'intégration $\tau$ pour augmenter $B\tau$ et ainsi diminuer $\delta T$ (donc augmenter la sensibilité), le dispositif de l'invention agit sur $T_{sys}$ grâce à la corrélation présentée plus haut et décrite plus en détail plus loin.

En diminuant $T_{sys}$, on réduit $\delta T$ (donc on augmente la sensibilité) sans augmenter la bande passante B ni le temps d'intégration $\tau$. De même, en diminuant $T_{sys}$, on réduit la bande passante B et/ou le temps d'intégration $\tau$ sans augmenter $\delta T$ donc sans réduire la sensibilité.

Lorsque la détection est de type numérique, la sensibilité du dispositif est inversement proportionnelle à la racine carrée du nombre d'échantillons traités sur un temps donné :

$$\delta T = T_{sys} / \sqrt{N}$$

avec :

-$T_{sys}$ : température de bruit de la chaîne située entre l'antenne et le convertisseur analogique-numérique,
N = nombre d'échantillons traités correspondant au produit du taux d'échantillonnage du convertisseur pour un temps donné.

Par conséquent, si l'on veut réduire la sensibilité sans augmenter considérablement le temps d'acquisition, il faut un récepteur avec un bruit le plus faible possible et un convertisseur analogique-numérique présentant un taux d'échantillonnage le plus élevé possible.

Ici encore, alors que les dispositifs connus cherchent à agir sur N en l'augmentant, pour diminuer $\delta T$ (donc augmenter la sensibilité), le dispositif de l'invention agit sur $T_{sys}$ grâce à la corrélation présentée plus haut et décrite plus en détail plus loin.

En diminuant $T_{sys}$, on réduit $\delta T$ (donc on augmente la sensibilité) sans augmenter N. De même, en diminuant $T_{sys}$, on réduit N sans augmenter $\delta T$ donc sans réduire la sensibilité.

L'objet de l'invention étant un dispositif apte à détecter des objets de très petite taille en mesurant la puissance de bruit émise, ce dispositif doit présenter un diagramme de rayonnement de la ou des antennes avec un angle d'ouverture à mi-puissance le plus faible possible.

Par ailleurs, les lobes secondaires du diagramme de rayonnement de l'antenne doivent être les plus faibles possibles.

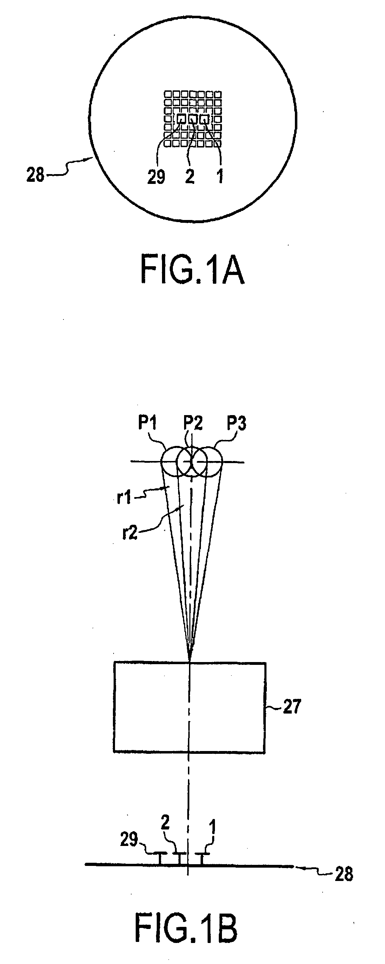

Egalement, chaque pixel unitaire P1, P2, P3, P4, c'est-à-dire l'aire de la scène vue par chaque antenne 1, 2 29, doit être discrétisée soit par balayage mécanique soit par balayage électronique (voir figures 1 a et 1b).

On entend par balayage mécanique l'orientation bi-angulaire du diagramme de rayonnement de l'ensemble optique-antennes via un élément mécanique permettant une observation dynamique de la scène par déplacement suivant deux directions dans le plan de la scène en x et y.

On entend par balayage électronique le décalage temporel d'un signal perçu par une antenne par rapport au signal perçu par une autre antenne. Ceci sous entend que les deux antennes observent une surface de scène commune, impliquant de ce fait une corrélation des signaux totale ou partielle.

Le décalage temporel à ainsi pour effet de réduire la surface de scène commune. En réalisant plusieurs décalages temporels et en combinant les résultats obtenus, il est possible de pixelliser la scène.

De plus, l'objet de l'invention étant un dispositif dont la sensibilité est la plus faible possible, dans le but de détecter des variations de température les plus faibles, ce dispositif doit présenter une ou des antennes dont le gain est très important, qui sont très directives, tout en présentant des pertes d'insertion les plus faibles.

Par ailleurs, le bruit propre du récepteur doit être le plus faible possible voire nul.

Egalement, l'étalonnage du système doit être très précis afin de tenir compte des variations de gain du récepteur périodiquement pendant la mesure.

En outre, dans le cas d'un traitement analogique, comme il sera expliqué plus loin, on retrouve en sortie du détecteur quadratique (sortie du récepteur) un intégrateur dont la constante d'intégration $\tau$ doit être importante pour augmenter la sensibilité.

Dans le cas d'un traitement numérique, comme il est également expliqué plus loin, on retrouve en sortie du détecteur quadratique un convertisseur analogique-numérique dont le taux d'échantillonnage doit être important pour augmenter la sensibilité et la résolution spatiale.

Comme représenté schématiquement à la figure 1a, le dispositif de l'invention est pourvu d'un élément optique 27 dont les caractéristiques sont de préférences déterminées pour favoriser la portabilité du dispositif.

La structure de l'optique 27 pourra par exemple être constituée d'une lentille.

Les éléments rayonnants 1, 2, 29 sont par exemple des antennes imprimées (patchs, Yagi, Log periodic..) 1, 2, 29, dont la topologie est ajustée pour atteindre la fréquence de résonance escomptée.

Ces antennes 1, 2, 29 sont disposées sur un support 28 et sont reliées àleurs récepteurs respectifs.

Les figures 1a et 1b illustrent l'ensemble optique 27 plus antennes imprimées 1, 2, 29, ainsi qu'un explicatif simplifié concernant le principe du rayonnement. Dans cet exemple, la matrice d'antennes 1, 2, 29 est constituée de 7 x 7 antennes 1, 2, 29 (figure 1 a).

L'antenne 2 situé au centre de la matrice rayonne dans l'axe perpendiculaire au plan de l'optique 27. L'antenne 29 situé à gauche de l'antenne centrale 2 rayonne quant à elle dans un axe incliné vers la droite par rapport à l'axe perpendiculaire au plan de l'optique 27, et l'antenne 1 situé à droite de l'antenne centrale 2 rayonne quant à elle dans un axe incliné vers la gauche par rapport à l'axe perpendiculaire au plan de l'optique 27.

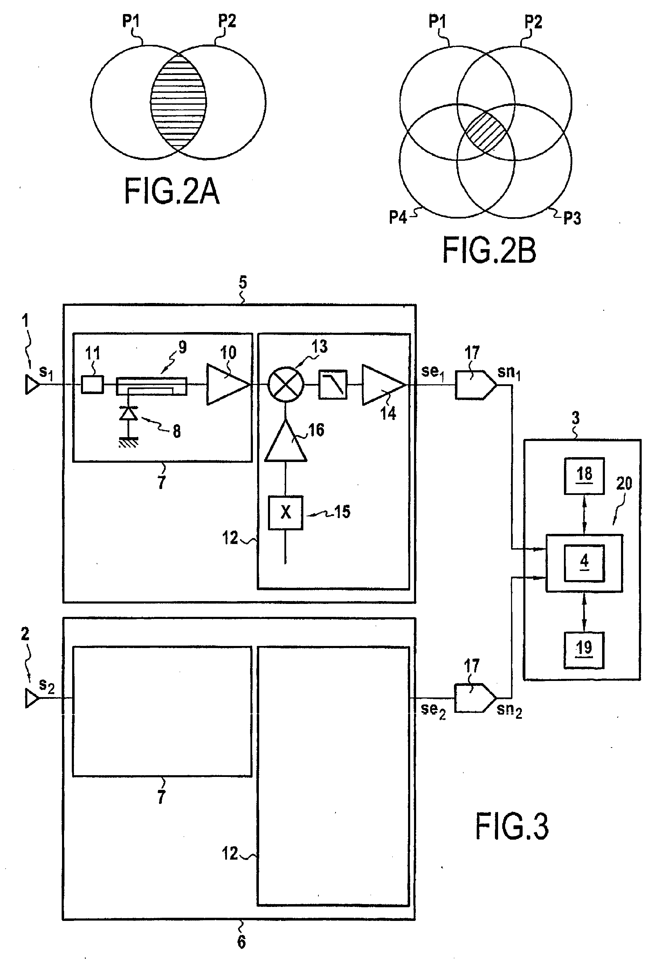

Pour obtenir une zone de recouvrement optimale entre deux antennes adjacentes (voir figures 2a et 2b), il est nécessaire de positionner les antennes 1, 2, 29 judicieusement. Cette zone de recouvrement correspond de préférence à la moitié de la surface couverte par une antenne.

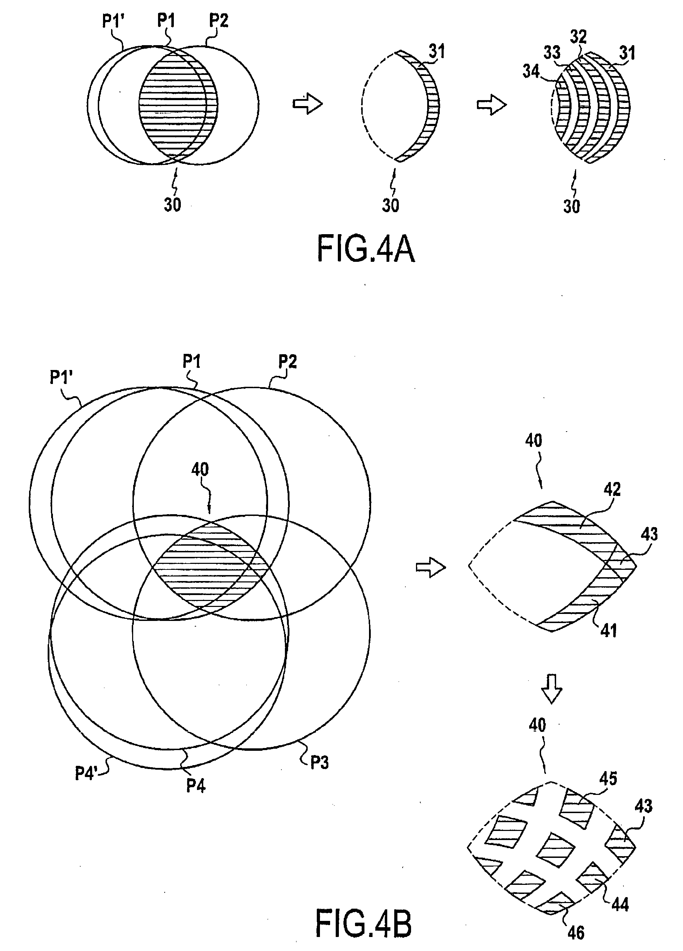

Selon l'invention, tel que représenté dans deux exemples en référence aux figures 3 et 4, on retrouve donc un module de réception 5, 6 associé à chaque antenne de réception 1, 2.

Les deux antennes 1, 2 sont aptes à capter les rayonnements électromagnétiques $r_1$ et $r_2$ (voir figures 1a et 1b) respectivement des points $P_1$ et $P_2$ (voir également figures 1 a et 1 b) d'un corps ou d'un objet, et à transformer ces rayonnements en un premier et un deuxième signal $S_1$, $S_2$ représentatifs respectivement des deux rayonnements $r_1$ et $r_2$.

Les deux modules de réception 5 et 6 sont donc aptes à recevoir respectivement les premier et deuxième signaux $s_1$, $s_2$ représentatifs respectivement des deux rayonnements $r_1$ et $r_2$, et aptes à transformer ces signaux $s_1$, $s_2$ respectivement en un premier et un deuxième signal électrique $se_1$, $se_2$.

Par ailleurs, une unité de traitement numérique 3 est prévue, pour créer, à partir des premier et deuxième signaux électriques $se_1$, $se_2$, un ou plusieurs signaux numériques représentatifs des rayonnements électromagnétiques, en vue d'afficher ces signaux numériques en tant qu'image du corps ou de l'objet sur un afficheur non représenté sur les figures.

Cette unité de traitement numérique 3 comprend une mémoire 18 et un micro-processeur 19, connectés à un circuit logique 20 de type FPGA.

Enfin, un module de corrélation 4 est prévu, pour corréler (directement ou indirectement) les premier et deuxième signaux électriques afin de former un ou plusieurs signaux représentatifs du rayonnement électromagnétique de l'intersection des points $P_1$ et $P_2$.

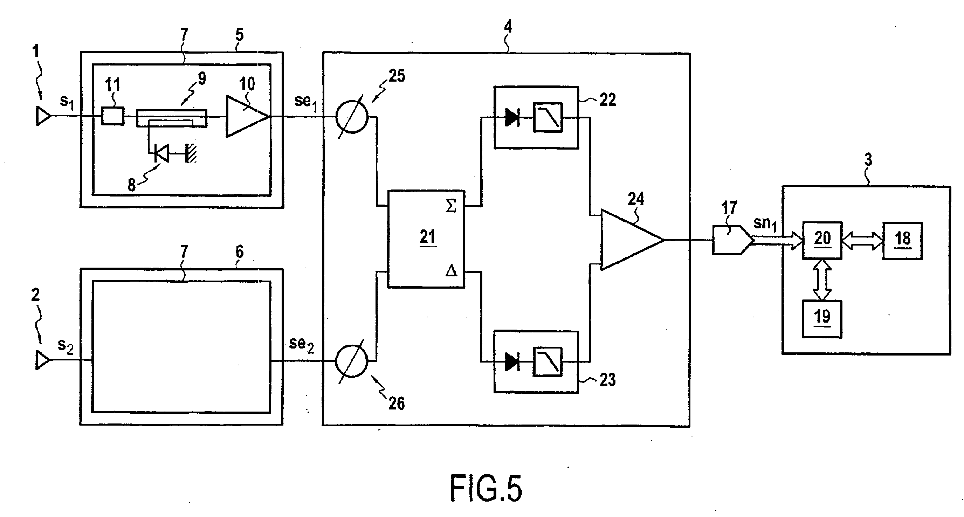

Comme il sera expliqué plus en détail plus loin, la configuration de la figure 3 est différente de celle de la figure 5, selon que la corrélation effectuée par le module de corrélation 4 est de type numérique (figure 3) ou analogique (figure 5).

Chaque module de réception 5, 6 peut contenir un module de transition antenne-récepteur 7.

De préférence, on retrouve dans le module de transition 7 un élément de transition 11 à proprement parler, une diode 8 d'injection de bruit connectée à un coupleur 9. Le coupleur 9 est un coupleur unidirectionnel, connecté quant à lui à un amplificateur à faible bruit 10.

L'ensemble coupleur unidirectionnel 9 et diode de bruit 8 est utilisé pour la détermination périodique du gain du récepteur 5, 6.

L'amplificateur à faible bruit 10 fonctionne en gamme d'onde millimétrique voire submillimétrique. Cet amplificateur 10 doit de préférence présenter un gain maximum et un facteur de bruit minimum, pour limiter la température de bruit du récepteur 5, 6, et doit surtout consommer un minimum de puissance pour éviter l'auto-échauffement du récepteur 5, 6.

Dans l'exemple de réalisation représenté à la figure 3, un module d'abaissement de fréquence 12 est prévu en sortie du module de transition 7.

Ce module d'abaissement de fréquence 12 qui peut être du type passif, ou actif afin de translater le signal issu de l'antenne 1, 2 dans une certaine bande fréquence.

De préférence, on retrouve alors dans ce module d'abaissement de fréquence 12 un mélangeur millimétrique 13 et un amplificateur à faible bruit et basse fréquence.

Le signal en sortie du mélangeur 13 est ainsi filtré, puis fortement amplifié en vue d'être numérisé et stocké en mémoire.

Le mélangeur 13 reçoit donc en entrée le signal issu du module de transition 7 et un signal de l'oscillateur local.

Le signal de l'oscillateur local n'est de préférence pas directement généré en gamme d'onde millimétrique (ou submillimétrique).

En effet, tous les oscillateurs locaux de l'ensemble des récepteurs 5, 6 doivent être synchrones ce qui implique l'utilisation d'une même source. Or la puissance nominale de ce signal de l'oscillateur local dans chaque module d'abaissement de fréquence 12 avoisine généralement les 10 dBm. De ce fait, dans le cas d'un exemple avec 49 récepteurs 5, 6 (matrice de 7 x 7 antennes), la source dédiée à la génération du signal de l'oscillateur local de l'ensemble des récepteurs devrait générer une puissance de 1 W environ.

Cette valeur de puissance est très importante et difficilement atteignable avec par exemple une source à diode de type gunn ou encore un amplificateur état solide.

C'est pourquoi on utilise de préférence une source (diode Gunn non représentée) fonctionnant en gamme d'onde centimétrique à faible bruit de phase et délivrant une puissance suffisamment importante. Le signal issu de la source centimétrique arrive sur un multiplicateur millimétrique 15, avant d'être amplifié par un amplificateur moyenne puissance millimétrique (ou submillimétrique) 16 pour atteindre une puissance suffisante afin de commander chaque mélangeur 13.

De plus, la réalisation de mélangeur 13 à faible puissance de signal d'oscillateur local est envisagée en utilisant par exemple la technologie antimoine associée à une architecture de mélangeur à diode Esaki, ou à transistor HBT.

Les hétérostructures à base de semiconducteur antimoine permettent de développer des diodes tunnels générant des non linéarités à très faible polarisation, critère physique essentiel pour le développement de mélangeur à faible puissance de commande d'oscillateur local.

Il faut noter que, dans le cas de signaux mono-harmoniques, plus l'abaissement en fréquence est important pour un taux d'échantillonnage donné, plus la résolution spatiale lors du balayage spatial est meilleure.

En revanche, dans le cas de signaux de bruit, donc multi-harmoniques, pour obtenir une meilleure résolution spatiale lors du balayage spatial en augmentant l'abaissement en fréquence pour un taux d'échantillonnage donné, il est nécessaire de traiter les signaux, notamment en compensant l'impact de l'abaissement en fréquence pour chaque harmonique du signal abaissé et en réalisant, préalablement à la corrélation, une déconvolution des effets de filtrage de l'antenne et du module de réception.

En effet, le phénomène de dilatation du temps induit par l'abaissement fréquentiel via un mélangeur est tout à fait vérifié lorsque le signal abaissé est de type mono-harmonique.

Ainsi, à titre d'exemple, si un signal sinusoïdal de fréquence 100 GHz est présenté en entrée du mélangeur 13 à bande latérale unique (bande latérale supérieure), et que la fréquence du signal de l'oscillateur local est égale à 99.99 GHz, alors le signal présent en sortie du mélangeur 13 aura une fréquence de 10 MHz.

Par conséquent, le rapport d'abaissement entre le signal en entrée du mélangeur 13 et le signal en sortie de ce mélangeur 13 est égal à 10 000.

Si un décalage temporel de 2 ps est imposé au signal haute fréquence en entrée du mélangeur 13, cela se traduira par un décalage temporel 10 000 fois plus grand en sortie du mélangeur 13, soit un décalage de 20 ns.

Par conséquent si le signal utile en entrée du mélangeur 13 est mono-harmonique, l'utilisation du module d'abaissement de fréquence 12 permet d'utiliser des CAN à taux d'échantillonnage pas trop élevé (<1 GS/s).

En revanche, si des CAN à taux d'échantillonnage supérieur à 200 Gs/s sont disponibles, alors l'abaissement de fréquence n'est plus nécessaire.

Cependant, dans le cas de l'invention, le signal mesuré et collecté par les antennes 1, 2 est de type radiométrique. Il s'agit d'un signal de bruit présentant une bande passante finie (imposée par la bande passante des antennes et des récepteurs associés). Ce signal est donc multi-harmonique.

Or, afin d'exploiter les propriétés physique induites par l'abaissement de fréquence du module 12 (compression ou dilatation du temps suivant le sens de conversion), il est nécessaire que les signaux mesurés soient mono-harmoniques.

De ce fait, dans le contexte de l'invention, il est nécessaire de générer un signal mono-harmonique et de l'utiliser pour éclairer la scène.

En d'autres termes, il est nécessaire de rendre le système « actif » tout en conservant le procédé d'acquisition et de balayage spatial numérique décrit dans la présente invention.

Comme indiqué plus haut, en configuration radiométrique, la caméra mesure le rayonnement thermique hyperfréquence naturel émis par un corps dont la température est différente de zéro degré absolu. Ce rayonnement thermique est équivalent à un signal de bruit présentant un nombre d'harmoniques supérieur à 1.

Par exemple, lorsqu'un signal de bruit de largeur de bande de fréquence 1 GHz centré autour de 99.5 GHz est injecté en entrée du mélangeur 13, et que la fréquence de l'oscillateur local est égal à 99 GHz, alors le signal présent en sortie du mélangeur 13 aura une bande de fréquence de 1 GHz centrée autour de 0.5 GHz.

L'harmonique de fréquence 100 GHz du signal en entrée du mélangeur 13 est abaissé en sortie de ce mélangeur 13 à l'harmonique de fréquence 1 GHz. Ceci se traduit par un facteur d'abaissement de 100.

En revanche, le facteur d'abaissement d'une harmonique du signal en entrée du mélangeur 13 à 99 GHz, est infini puisque la valeur de la fréquence en sortie du mélangeur 13 est nulle.

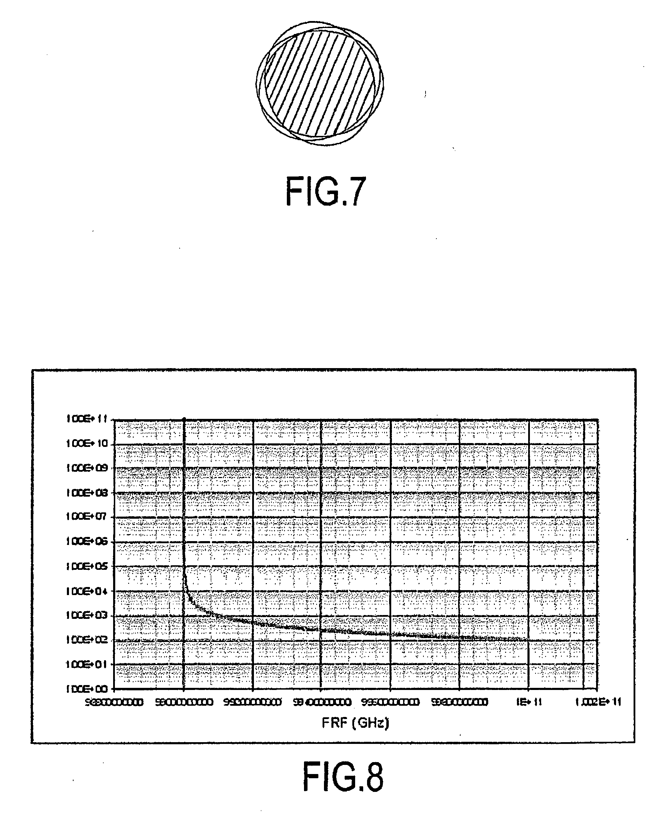

Ainsi, on constate que le facteur d'abaissement n'est pas du tout constant dans toute la bande de fréquence, comme illustré sur la figure 8 qui montre l'évolution du facteur d'abaissement A d'un signal de bruit centré autour de 99,5 GHz et de bande passante 1 GHz, en fonction de la fréquence FRF du signal en entrée du mélangeur 13.

L'évolution du facteur d'abaissement a un impact important puisque un décalage temporel de 5 ps du signal de bruit sur l'entrée du mélangeur 13 se traduit également par un décalage temporel de 5 ps du signal sur la sortie de ce mélangeur 13.

Par conséquent, l'intérêt du mélangeur vis-à-vis de la dilatation du temps n'est plus visible sur un signal multi-harmonique. En effet dans cette configuration, pour atteindre une résolution temporelle de 5 ps, il est nécessaire d'utiliser un convertisseur analogique numérique présentant un taux d'échantillonnage de 200 GS/s.

Dans ce cadre, l'augmentation du coût du dispositif devient exponentielle avec l'augmentation de la fréquence d'échantillonnage.

Afin de contrecarrer l'impact de la forte variation de l'abaissement en fonction de la fréquence du signal en entrée du mélangeur 13, un traitement du signal peut être ajouté.

A partir de la valeur de la fréquence du signal de l'oscillateur local (dans notre exemple 99 GHz), on détermine pour chaque harmonique du signal en sortie du mélangeur 13 le facteur d'abaissement subit.

Pour ce faire, on réalise la transformée de Fourier du signal de bruit présent en sortie du mélangeur 13, et on applique pour chaque harmonique l'inverse du facteur d'abaissement subit. On reconstruit ainsi le spectre du signal en entrée du mélangeur 13.

La transformée de Fourier inverse du spectre reconstitué permet ensuite d'obtenir une bonne approximation de l'évolution temporelle du signal de bruit en entrée du mélangeur 13 avant abaissement, mais échantillonné avec une fréquence d'échantillonnage égale à 198 GS/s, soit un échantillon tous les 5.05 ps.

Ainsi, le traitement numérique proposé permet d'atteindre la résolution temporelle recherchée tout en utilisant un convertisseur analogique numérique à taux d'échantillonnage largement plus faible, soit, dans notre exemple, 2 GS/s.

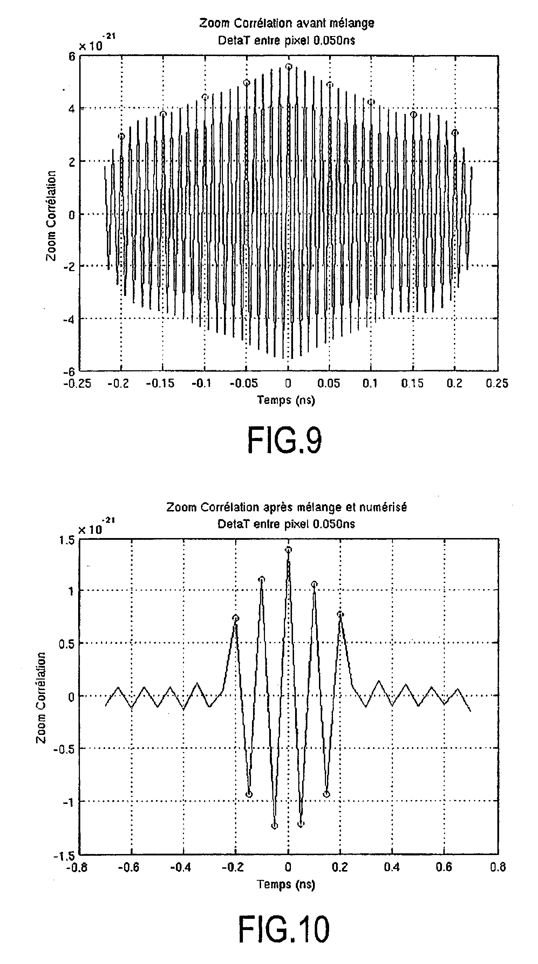

Les graphes représentés sur les figures 9, 10 et 11 permettent d'illustrer ce qui a été expliqué ci-dessus. Pour chacun de ces graphes, les valeurs en ordonnées correspondent aux valeurs du produit de corrélation normalisées, donc sans unités.

Le graphe de la figure 9 représente le résultat du produit de corrélation entre les signaux émis par la scène et perçus par deux antennes à bande passante égale à 10 GHz centrée autour de 95 GHz, sans abaissement de fréquence. Dans cet exemple, la scène correspondant à la zone de recouvrement vue par les deux antennes est modélisée par neuf surfaces élémentaires (pixels) dont la température varie.

Chaque amplitude de pic est proportionnelle à la température de chaque pixel. La position temporelle de chaque pic de corrélation principal (représentée par un cercle), correspond à la position géographique de chaque pixel.

On constate, dans cet exemple, la présence de pics secondaires autour de chaque pic de corrélation, liée à faible largeur de la bande passante. Plus la bande passante est étroite, plus il est difficile de distinguer des pixels proches. Cependant l'allure de l'enveloppe du produit de corrélation représente le profil de température de la scène.

On note également que les valeurs négatives du produit de corrélation sont liées à la numérisation des pixels (artéfacts de simulation).

Le graphe de la figure 10 représente le résultat du produit de corrélation entre les signaux émis par la scène et perçus par deux antennes à bande passante égale à 10 GHz centrée autour de 95 GHz, avec abaissement de fréquence (utilisation d'un mélangeur 13 ayant un signal d'oscillateur local de fréquence 90 GHz) et échantillonné à 20 GS/s.

Comme on peut le constater par comparaison entre les graphes des figures 10 et 9, le résultat du produit de corrélation après abaissement ne représente pas l'allure du profile de température de la scène.

Aussi, on réalise la transformée de Fourier des deux signaux échantillonnés et abaissés en fréquence.

Connaissant la fréquence de l'oscillateur local (90GHz dans l'exemple), on détermine le facteur d'abaissement subit par chaque harmonique, et par traitement inverse, on « remonte » au spectre du signal avant abaissement.

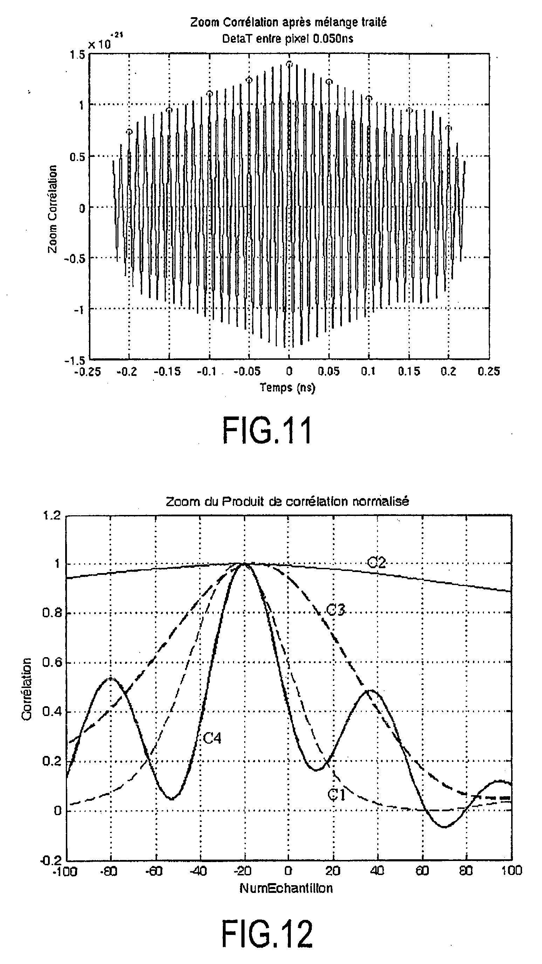

L'évolution temporelle des deux signaux est alors obtenue par transformée de Fourrier inverse. Ces signaux temporels sont alors corrélés numériquement. Les résultats sont présentés sur le graphe de la figure 11 ci-après.

Comme on peut le constater par comparaison entre le graphe de la figure 11 et le graphe de la figure 9, le traitement du signal présenté plus haut permet de reconstituer le profil de température de la scène, même après abaissement de fréquence et numérisation.

De plus ce traitement permet d'atteindre une résolution temporelle adéquate avec un CAN à taux d'échantillonnage sous dimensionné, donc moins coûteux, par rapport à la résolution spatiale souhaitée.

Dans le cadre de l'invention, il n'est pas nécessaire d'utiliser des CAN présentant un nombre de bits de codage élevé. En effet, le produit de corrélation effectué sur des signaux numérisés via des CAN de type 1 bit donne des résultats identiques à celui réalisé avec des signaux numérisés via des CAN de type 10 bits.

Ce point est particulièrement important, car cela permet de privilégier la fréquence d'échantillonnage par rapport au nombre de bit de codage. Ceci permet aussi de réduire fortement le coût, la consommation de puissance électrique et donc de limiter l'échauffement du système.

Par ailleurs, plus la bande passante du signal en sortie du mélangeur 13 est étroite, plus l'amplitude des pics secondaires est importante. De même plus la fréquence de coupure haute de la bande passante du signal en sortie du mélangeur 13 est faible, plus l'étalement des pics de corrélation (principaux et secondaires) est important.

Afin de limiter ces deux phénomènes, on peut déconvoluer l'influence de l'effet de filtrage induit par les modules de réception. L'impact de la déconvolution est illustré sur le graphe de la figure 12.

Sur le graphe de la figure 12, les valeurs en ordonnées correspondent aux valeurs du produit de corrélation normalisées, donc sans unités, et les valeurs en abscisse correspondent à des numéros d'échantillon.

Par ailleurs, sur ce graphe de la figure 12, la courbe référencée C1 représente le produit de corrélation entre les signaux émis par le pixel unique de la scène sans filtrage, la courbe C2 représente le produit de corrélation entre les signaux émis par le pixel unique de la scène avec filtrage, la courbe C3 représente le produit de corrélation entre les signaux émis par le pixel unique de la scène avec filtrage puis déconvolution de la fonction de transfert du filtre jusqu'à 10 MHz, et enfin la courbe C4 représente le produit de corrélation entre les signaux émis par le pixel unique de la scène avec filtrage puis déconvolution de la fonction de transfert du filtre jusqu'à 20 MHz.

On constate bien, par comparaison entre la courbe C2 et la courbe C1, le phénomène d'étalement du pic de corrélation dû au filtrage, puis par comparaison entre les courbes C3 et C4 d'une part et la courbe C2 d'autre part, la diminution importante du phénomène d'étalement du pic de corrélation grâce à la déconvolution.

Cette technique permet donc de réduire la bande passante du signal en sortie du mélangeur 13, sans réduire la résolution spatiale.

Dans l'exemple de la figure 3, il est possible de ne pas utiliser de module d'abaissement de fréquence 12, avec des modules de réception 5, 6 homodynes.

Ce type de dispositif, avec des modules de réception 5, 6 homodynes sans module d'abaissement de fréquence 12, présente un intérêt par rapport à un dispositif avec des modules de réception 5, 6 avec module d'abaissement de fréquence 12, en terme d'encombrement, de consommation de puissance, de coût et de précision. De plus, cela permet de s'affranchir en grande partie du traitement numérique des signaux post corrélation et donc de réduire le temps et la puissance de calcul du dispositif.

Mais il implique d'utiliser un convertisseur analogique/numérique 17 en sortie de chaque module de réception 5, 6 qui soit du type millimétrique (voire submillimétrique) à taux d'échantillonnage élevé afin de respecter la règle de Shannon (taux d'échantillonnage supérieur à 2 fois la fréquence du signal millimétrique).

Dans cet exemple représenté à la figure 3, dans les deux cas, c'est-à-dire avec ou sans module d'abaissement de fréquence 12, le convertisseur analogique/numérique 17 doit offrir un échantillonnage rapide afin de permettre un balayage spatial avec une résolution spatiale la meilleure possible.

En effet, le balayage spatial de la scène sera effectué en réalisant le produit de corrélation, par le module de corrélation 4, des signaux issus de deux antennes adjacente 1, 2 et en appliquant un décalage temporel d'un signal par rapport à l'autre.

Etant donné que les signaux sont numérisés, le décalage temporel minimum correspond au décalage d'un échantillon. Par conséquent, plus le taux d'échantillonnage est élevé, plus l'écart temporel entre deux échantillons est étroit, et plus la résolution spatiale lors du balayage spatial est meilleure.

Cependant, dans le cas où l'on utilise un module d'abaissement de fréquence 12, avec des signaux mono-harmoniques ou des signaux multi-harmoniques mais traités par l'approche mathématique présentée plus haut (compensation de l'abaissement en fréquence et déconvolution), il se produit une sorte de « dilatation du temps » après un certain abaissement ab, de sorte qu'un décalage temporel de x secondes sur le signal basse fréquence génère un décalage temporel d'une durée de x/ab (en secondes) du signal millimétrique. Donc, ici encore, plus le taux d'échantillonnage est élevé, plus l'écart temporel entre deux échantillons est étroit, et plus la résolution spatiale lors du balayage spatial est meilleure.

De préférence, et en référence à l'exemple représenté en figure 3, on peut placer les modules de réception 5, 6 et l'unité de traitement numérique 3 sur la même puce de semi-conducteur. La réalisation de l'ensemble modules de réception 5, 6 analogiques et unité de traitement numérique 3 peut ainsi être développé en technologie MMIC, suivant la technologie de fabrication utilisée (Semiconducteur III-V, SiGe, Si...).

La corrélation par le module de corrélation peut être du type numérique ou analogique.

Comme déjà évoqué plus haut, le balayage spatial mécanique implique une dégradation importante de la sensibilité radiométrique en raison des multiples mesures réalisées pour reconstituer l'image.

En effet, si l'on souhaite par exemple que le nombre minimum de pixels constituants une image de 20 x 20 cm$^2$ soit de 130 x 130 pixels, cela correspond à une surface de 5 mm$^2$ pour chaque pixel.

En supposant par exemple que l'optique utilisé est tel que présenté plus haut (par exemple 10 cm de diamètre, matrice de 7 x 7 patchs), la surface de la zone de recouvrement (figure 2a) entre deux antennes adjacentes doit être de l'ordre de 2.5 x 5 cm$^2$.

Le produit de corrélation analogique ne peut être effectué qu'entre les signaux issus de deux antennes adjacentes présentant une zone de recouvrement à mi puissance lié à l'architecture du corrélateur analogique (figure 5).

En considérant deux antennes adjacentes présentant une zone de recouvrement, la taille du pixel après produit de corrélation analogique sera inférieure à 2.5 x 5 cm$^2$ (voir figures 2a).

Pour obtenir le nombre minimum de pixels dans l'image évoqué ci-dessus, il est nécessaire de réaliser cinq déplacements suivant un premier axe et 10 déplacements suivant un deuxième axe, soit 50 au total, en considérant que pour chaque position le produit de corrélation analogique est réalisé.

Le produit de corrélation numérique peut être effectué entre les signaux issus de toutes les antennes adjacentes présentant une zone de recouvrement à mi puissance (figure 3) car la corrélation est effectuée à posteriori.

En considérant quatre antennes adjacentes présentant une zone de recouvrement, la taille du pixel après produit de corrélation numérique sera inférieure à 2.5 x 2.5 cm$^2$ (voir figures 2b). Ici aucun déplacement mécanique n'est nécessaire car la pixellisation de l'image est réalisée en discrétisant toutes les zones de recouvrement constituant l'image « brutes », en réalisant le produit de corrélation numérique pour différentes valeurs de $\tau$ (délais électrique entre les signaux issus de deux antennes présentant une zone de recouvrement).

Afin d'améliorer la pixellisation de l'image, d'autres traitements numériques peuvent être réalisés par l'unité de traitement 3 comme la déconvolution, le filtrage... quelle que soit la méthode de corrélation utilisée.

Dans le cas d'une corrélation de type numérique (figure 3), le module de corrélation numérique 4 est de préférence intégré à l'unité de traitement numérique 3, dans le module logique 20 de type FPGA, et reçoit en entrée les signaux numériques $sn_1$ et $sn_2$ issus des modules de conversion analogique-numérique 17.

Le produit de corrélation numérique ainsi calculé est alors :

$$C\, sn_1\, sn_2\, (\tau) = \int_{+\infty}^{-\infty} sn_1\, (t)\, sn_2{}^*(t-\tau)dt$$

Ainsi, le produit de corrélation numérique entre les signaux issus de deux antennes adjacentes 1, 2 permet d'obtenir la zone de recouvrement optimale.

En faisant varier la constante de temps $\tau$ (voir explications plus haut), la surface de la zone de recouvrement varie, permettant ainsi de réaliser un balayage spatial de la scène.

Comme expliqué plus haut, pour la réalisation du produit de corrélation numérique, une architecture de module de réception 5, 6 spécifique est prévue, dans le but notamment d'obtenir l'information de phase et d'amplitude de chaque signal pour pouvoir réaliser ce produit de corrélation.

De ce fait, les signaux issus de l'ensemble des antennes 1,2 de la matrice (voir aussi figures 1a et 1b) sont de préférence échantillonnés séparément.

Dans le cas d'une corrélation de type analogique; l'architecture du dispositif est différente puisque le module de corrélation analogique n'est plus intégré à l'unité de traitement numérique.

Cette architecture reste basée sur un balayage spatial par mouvements mécaniques, avec un produit de corrélation des signaux issus de deux antennes adjacentes, impliquant la présence d'une zone de recouvrement optimale telle que présentée plus haut.

L'intérêt majeur d'un module de corrélation analogique réside dans le fait que le module de réception 5, 6 intègre le signal radiométrique sur toute sa bande passante, permettant ainsi d'obtenir une sensibilité radiométrique plus importante.

En effet, comme le montre l'expression de la sensibilité d'un récepteur radiométrique, plus le dispositif présente une large bande passante, plus la sensibilité sera faible :

$$\delta T = T_{sys} / \sqrt{(B\tau)}$$

Cependant, le produit de corrélation ne peut être effectué, pour des raisons de complexité du système, qu'entre les signaux issus de deux antennes adjacentes 1, 2, c'est-à-dire dans une dimension de l'espace uniquement (voir figure 2a), contrairement au dispositif à module de corrélation 4 numérique qui peut réaliser le produit de corrélation entre les signaux issus de trois, voire quatre, antennes adjacentes dans plusieurs dimensions de l'espace (voir figure 2b).

De ce fait, dans le cas d'une matrice de 7 x 7 antennes 1, 2 (voir figures 1a et 1b), il est nécessaire de réaliser 5 déplacements dans la direction correspondant à la position des deux antennes 1, 2 dont les signaux sont corrélés et 10 déplacements dans l'autre direction soit 50 au total.

Si l'ensemble optique 27, patchs d'antennes 1, 2, modules de réception 5, 6 (voir figures 1a et 1b), présente une largeur de bande de 10 GHz, en considérant un temps de mesure $\tau$ = 0.2s par position (étape de calibrage non incluse) et une température de bruit propre des modules de réception 5, 6 de 1810 K, la sensibilité radiométrique avoisinera 0.04°.

Cette valeur de sensibilité est très intéressante puisqu'elle est inférieure à celle obtenue avec un dispositif à module de corrélation 4 numérique et pour une taille mémoire de 1024 MB.

Les deux modules de réception 5, 6 associés chacun à une antenne 1, 2, et dont les signaux doivent être corrélés, doivent être les plus appairés possible en terme de phase et d'amplitude pour la réalisation de ce produit de corrélation.

En outre, cette solution par corrélation analogique implique d'utiliser des amplificateurs large bande.

La configuration du dispositif à module de corrélation 4 analogique est donc présentée en référence à l'exemple non conforme à l'invention représenté en figure 5.

Ainsi, on retrouve bien les modules de réception 5 et 6 associés aux antennes 1 et 2, chacun comprenant un module de transition 7, tel qu'il a déjà été expliqué en référence à la figure 3, sans module d'abaissement de fréquence 12.

Ainsi, les signaux issus de deux antennes adjacentes 1, 2 présentant une zone de recouvrement optimale sont amplifiés par deux amplificateurs indépendamment avant d'être combinés entre eux pour les besoins de la corrélation analogique.

Le module de corrélation 4 analogique et les modules de réception 5 et 6 peuvent être placés sur la même puce de semi-conducteur.

Le module de corrélation 4 analogique comprend ainsi un premier sous-module 21 destiné à générer en sortie, à partir d'une part du premier signal électrique $se_1$ issu du module de transition 7 du premier module de réception 5, et d'autre part du deuxième signal électrique $se_2$ issu du module de transition 7 du deuxième module de réception 6, deux signaux correspondant respectivement à la somme et à la différence des deux signaux en entrée $se_1$ et $se_2$. Les déphaseurs 25 et 26 sont utilisés pour compenser le décalage en phase induit par le fait que les deux modules de réception 5,6 ne sont pas forcément appairés.

Ce premier sous-module 21 est de préférence un coupleur hybride 21 à deux entrées.

Par ailleurs, le module de corrélation 4 comprend au moins deux sous-modules 22, 23 de détection quadratique destinés à recevoir en entrée respectivement les deux signaux de sortie du premier sous-module 21.

Ainsi, la valeur quadratique moyenne des deux signaux issus des deux sorties du premier sous-module 21 est mesurée via les deux modules 22, 23 de détection quadratique.

De préférence, les signaux en sortie des deux modules de détection quadratique 22, 23 sont ensuite amplifiés par un amplificateur différentiel 24.

De ce fait le signal en sortie de l'amplificateur différentiel 24 correspond au produit de corrélation des deux signaux issus de deux antennes 1 et 2.

Ce signal correspond à la puissance de bruit moyenne émise par la scène dont la surface correspond à la zone de recouvrement (intersection des points P1 et P2, voir figures 2a et 2b).

Ce signal est ensuite numérisé par le convertisseur analogique-numérique 17 avant d'être stocké en mémoire vive 18.

La présence des deux déphaseurs fixes 25 et 26 dans le module de corrélation 4 analogique, en sortie des deux amplificateurs hyperfréquences 10 dans chaque module de transition 7 des modules de réception 5 et 6, permet d'appairer les deux voies en phase afin que le produit de corrélation soit maximum.

Afin de réduire le gain des amplificateurs millimétriques 10, voire d'éliminer ceux-ci de la chaine, on peut envisager d'utiliser des détecteurs quadratiques 22, 23 ultra sensibles, par exemple par l'intermédiaire de diodes tunnels de type Esaki à base d'antimoine. En effet, cette technologie de diode permet de détecter une puissance de signal millimétrique inférieure à -80 dBm sans utilisation d'amplificateurs millimétriques. Cette valeur de puissance correspond à la puissance d'un signal de bruit émis par un corps à température ambiante sur 20 GHz de bande passante.

Ainsi, le procédé d'imagerie radiométrique selon l'invention, qui peut être mis en oeuvre par le dispositif tel que présenté plus haut comprend tout d'abord une étape de réception et de transformation en signaux électriques $se_1$, $se_2$. par au moins le premier et le deuxième modules de réception 5, 6, respectivement d'un premier et d'un deuxième signal $s_1$, $s_2$ représentatifs des rayonnements $r_1$, $r_2$ du premier et du deuxième points $P_1$, $P_2$ d'un corps ou d'un objet captés par la première et la deuxième antennes 1, 2.

Ensuite, à partir des premier et deuxième signaux électriques $se_1$, $se_2$, est mise en oeuvre une étape de création, par l'unité de traitement numérique 3, d'au moins un signal numérique représentatif des rayonnements électromagnétiques $r_1$, $r_2$.

Ce signal numérique est destiné à être affiché par un afficheur en tant qu'image du corps ou de l'objet.

Par ailleurs, la corrélation des premier et deuxième signaux électriques $se_1$, $se_2$ est mise en oeuvre, dans le but de former au moins un signal représentatif du rayonnement électromagnétique de l'intersection des premier et deuxième points $P_1$, $P_2$ du corps ou de l'objet.

Dans le cas de la corrélation numérique (figure 3), les premier et deuxième signaux électriques $se_1$, $se_2$ sont convertis respectivement en un premier et un deuxième signal numérique $sn_1$, $sn_2$ par les modules 17 de conversion, et la corrélation est alors mise en oeuvre sur ces signaux numériques $sn_1$, $sn_2$, auxquels le traitement mathématique présenté plus haut est préalablement appliqué (transformée de Fourier, correction du facteur d'abaissement pour chaque harmonique, déconvolution du filtrage de la chaîne de réception, et transformée de Fourier inverse).

Chaque traitement mathématique fait l'objet d'un module de traitement numérique (non représenté en figure 3) implémenté dans l'unité de traitement numérique 3, au même titre que le module de corrélation numérique 4. On parle donc par exemple d'un module de transformée de Fourier, d'un module de correction du facteur d'abaissement pour chaque harmonique, d'un module de déconvolution du filtrage de la chaîne de réception, et d'un module de transformée de Fourier inverse.

La corrélation numérique comprend notamment au moins une étape de calcul, à partir des premier et deuxième signaux numériques $sn_1$, $sn_2$, d'au moins un signal numérique de corrélation représentatif du rayonnement électromagnétique de l'intersection des premier et deuxième points $P_1$, $P_2$ du corps ou objet.

La corrélation numérique comprend également au moins une étape de création par calcul d'au moins un troisième signal numérique représentatif du rayonnement électromagnétique d'une zone voisine du premier et/ou deuxième points $P_1$, $P_2$.

La corrélation numérique comprend enfin au moins une étape de calcul, à partir d'une part du premier et/ou du deuxième signal numérique, et d'autre part du troisième signal numérique, d'au moins un signal numérique de corrélation représentatif du rayonnement électromagnétique de l'intersection du premier et/ou du deuxième points $P_1$, $P_2$ du corps ou objet, avec la zone voisine.

Autrement dit, par la corrélation numérique, on peut construire l'information numérique relative à la zone voisine par le calcul, sans balayage mécanique.

Pour ce faire, l'étape de création par calcul du troisième signal numérique représentatif du rayonnement électromagnétique de la zone voisine du premier et/ou deuxième points $P_1$, $P_2$ comprend elle-même une étape de décalage temporel ou de déphasage du premier et/ou deuxième signal numérique $sn_1$, $sn_2$.

Ainsi, il est possible, par un balayage numérique, d'augmenter fortement la résolution.

Tous les signaux provenant des antennes présentant une zone de recouvrement peuvent être corrélés, par corrélation numérique multiple.

La pixellisation de l'image est ainsi réalisée par discrétisation de toutes les zone de recouvrement en réalisant le produit de corrélation pour différents décalages temporels (ou déphasages).

De la sorte, la corrélation numérique multiple a posteriori, ne nécessite qu'une seule mesure pour chaque antenne.

A titre d'illustration, la figure 4a montre le signal numérique 30 représentatif de l'intersection entre deux points P1 et P2 adjacents, obtenu par corrélation des signaux représentatifs des points P1 et P2.

En réalisant numériquement un décalage temporel, on crée mathématiquement le point P1' et son signal correspondant, qui peut alors être corrélé avec le signal représentatif du point P2 ou avec le signal représentatif de l'intersection 30 des points P1 et P2. Le résultat de cette corrélation correspond à la bande 31.

En itérant ce procédé pour différentes valeurs de décalage temporel, jusqu'à obtenir un produit de corrélation nul, on obtient différentes bandes 31, 32, 33, 34, correspondant à une discrétisation de la zone de recouvrement initiale 30.

Si l'on met en oeuvre ce procédé pour toutes les zones d'intersection deux à deux d'une matrice d'antennes, on obtient une discrétisation matricielle telle qu'illustrée en figure 4b.

Cette figure 4a montre le signal numérique 40 représentatif de l'intersection entre quatre points P1, P2, P3 et P4 adjacents dans deux directions, obtenu par corrélation des signaux représentatifs des points P1, P2, P3 et P4.

En réalisant numériquement un décalage temporel selon une première direction, on crée mathématiquement le point P1', et en réalisant numériquement un décalage temporel selon une deuxième direction, on crée mathématiquement le point P4'.

L'intersection 40 entre les quatre points P1, P2, P3 et P4 adjacents est alors discrétisée en la bande 41 et la bande 42 dont l'intersection forme un pixel élémentaire 43.

En itérant ce procédé pour différentes valeurs de décalage temporel dans chacune des deux directions, jusqu'à obtenir un produit de corrélation nul, on obtient différents pixels 43, 44, 45, 46, correspondant à une discrétisation de la zone de recouvrement initiale 40.

Alternativement, dans le cas de la corrélation analogique tel que l'exemple non conforme à l'invention illustré à la figure 5, l'étape de corrélation est mise en oeuvre directement sur les premier et deuxième signaux électriques $se_1$, $se_2$.

Cette étape de corrélation analogique génère au moins un signal électrique de sortie qui est converti en au moins un signal numérique $sn_1$ par le module 17 de conversion en vue d'un traitement par l'unité de traitement 3, et notamment en vue de la création de l'image du corps ou objet.

Cette étape de corrélation analogique comprend une étape de création de deux signaux électriques correspondant respectivement à la somme et à la différence du premier signal électrique et du deuxième signal électrique déphasé.

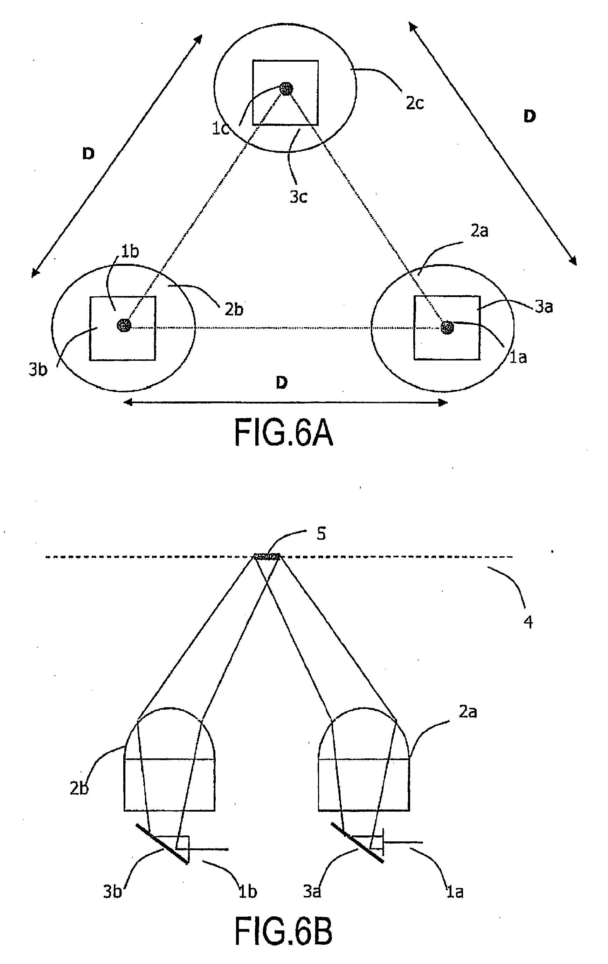

Un autre exemple de détection du rayonnement électromagnétique des points d'un corps ou d'un objet est représenté schématiquement aux figures 6a et 6b.

Dans cet exemple, le dispositif est pourvu au minimum de deux optiques 2a, 2b, de préférence 3 optiques 2a, 2b, 2c, dont les caractéristiques sont de préférences déterminées pour favoriser la portabilité du dispositif.

La structure de chaque optique 2a, 2b, 2c pourra par exemple être constituée d'une lentille.

Chaque optique 2a, 2b, 2c est associé à au moins un élément rayonnant 1a, 1b, 1c pouvant être par exemple une antenne imprimée (patchs, Yagi, Log periodic...) dont la topologie est ajustée pour atteindre la fréquence de résonnance escomptée.

Entre chaque optique 2a, 2b, 2c et éléments rayonnants 1a, 1b, 1c, est intercalé au moins un miroir 3a, 3b, 3c inclinable de manière bi-angulaire, permettant d'orienter l'angle de vision du dispositif dans le plan 4 de la scène 5.

Afin que le produit de corrélation puisse être réalisé, il est nécessaire qu'au moins deux antennes voient une même surface de scène 5. En d'autres termes, les miroirs 3a, 3b, 3c sont utilisés pour orienter le faisceau de chaque ensemble antenne plus optique, afin que ces ensembles voient une surface de scène commune.

Dans cette configuration la zone de recouvrement optimale est définie par la surface totale vue par chacune des antennes.

L'intérêt de cette topologie de dispositif réside dans le fait que les antennes sont espacées d'une distance D bien plus importante que pour la variante à un seul optique telle que représentée aux figures 1a, 1b. De ce fait, pour atteindre la même résolution spatiale, on peut utiliser des convertisseurs analogiques numériques à taux d'échantillonnage beaucoup plus faible. Cependant, en contrepartie, cette topologie présente un encombrement bien plus important.

La figure 7 représente schématiquement la résolution de détection radiométrique du dispositif de l'invention, avec la mise en évidence des zones de recouvrement, dans l'exemple des figures 6a et 6b.

Ainsi, la zone hachurée sur la figure 7 illustre la zone recouvrement des trois antennes 1 a, 1b, 1c de la figure 6a, vue dans le plan 4 de la scène 5. Cette zone de recouvrement correspond à la superposition de trois surfaces elliptiques.

En réalisant le produit de corrélation entre les signaux perçus par les deux antennes 2a, 2b (figure 6b), ou par une combinaison de deux antennes parmi les trois antennes 2a, 2b, 2c (figure 6a), discrétise la zone de recouvrement, soit par décalage temporel (architecture numérique), soit par balayage mécanique utilisant les miroirs (architecture analogique).

Dans le cas de l'exemple de dispositif utilisant trois ensembles antennes 2a, 2b, 2c plus optiques 3a, 3b, 3c, la zone de recouvrement va être discrétisée suivant trois directions parallèles respectivement aux directions d'écartement D entre chaque ensemble antenne plus optique (figure 6a). L'approche de pixellisation de la scène est alors la même que celle présentée plus haut en référence aux figures 4a et 4b, sauf que la zone de recouvrement est totale.

**Revendications**

1. Dispositif d'imagerie radiométrique portable comprenant :

   - au moins une première et une deuxième antennes de réception (1, 2) aptes à capter les rayonnements électromagnétiques ($r_1$, $r_2$) respectivement d'un premier et d'un deuxième points ($P_1$, $P_2$) d'un corps ou d'un objet, et à les transformer respectivement en un premier et un deuxième signal ($s_1$, $s_2$) représentatifs de ces dits rayonnement ($r_1$, $r_2$),
   - au moins un premier et un deuxième module de réception (5, 6) respectivement associés aux dites première et deuxième antennes (1, 2), et aptes à recevoir respectivement lesdits premier et deuxième signaux ($s_1$, $s_2$) représentatifs desdits rayonnements ($r_1$, $r_2$), et à les transformer respectivement en un premier et un deuxième signal électrique ($se_1$, $se_2$),
   - une unité de traitement numérique (3) apte à créer, à partir desdits premier et deuxième signaux électriques ($se_1$, $se_2$), au moins un signal numérique représentatif desdits rayonnements électromagnétiques, et destiné à être affiché par un afficheur en tant qu'image dudit corps ou objet,
   caractérisé en ce le premier et le deuxième module de réception (5, 6) comprennent un module d'abaissement de fréquence (12), et en ce que le dispositif comprend en outre :
   - au moins un module de déconvolution, apte à déconvoluer les premier et deuxième signaux électriques ($se_1$, $se_2$) en sortie respectivement du premier et du deuxième module de réception (5, 6),
   - un module de corrélation (4) apte à corréler lesdits premier et deuxième signaux électriques ($se_1$, $se_2$) déconvolués afin de former au moins un signal représentatif du rayonnementélectromagnétique de l'intersection desdits premier et deuxième points ($P_1$, $P_2$) dudit corps ou objet.

2. Dispositif selon la revendication 1, **caractérisé en ce que** le premier et/ou le deuxième module de réception (5, 6) comprennent un module de transition (7) comprenant de préférence une diode (8) d'injection de bruit connectée à un coupleur (9), ce dit coupleur (9) étant de préférence connecté à un amplificateur à faible bruit (10).

3. Dispositif selon l'une quelconque des revendications 1 et 2, **caractérisé en ce que** les modules d'abaissement de fréquence (12) comprennent un mélangeur millimétrique (13) et un amplificateur faible bruit basse fréquence (14).

4. Dispositif selon l'une quelconque des revendications 1 à 3, **caractérisé en ce que** les modules de réception (5, 6) et l'unité de traitement numérique (3) sont placés sur une même puce de semi-conducteur.

5. Dispositif selon l'une quelconque des revendications 1 à 4, **caractérisé en ce que** le dispositif comprend un module (17) de conversion des premier et deuxième signaux électriques ($se_1$, $se_2$) respectivement en un premier et un deuxième signal numérique ($sn_1$, $sn_2$), et **en ce que** le module de corrélation (4) est un module de corrélation numérique (4) desdits signaux numériques ($sn_1$, $sn_2$), de préférence intégré à l'unité de traitement (3).

6. Procédé d'imagerie radiométrique comprenant :

   - une étape de réception et de transformation en premier et deuxième signaux électriques ($se_1$, $se_2$), par au moins un premier et un deuxième modules de réception (5, 6), respectivement d'un premier et d'un deuxième signal ($s_1$, $s_2$) représentatifs des rayonnements ($r_1$, $r_2$) d'un premier et d'un deuxième points ($P_1$, $P_2$) d'un corps ou d'un objet captés par une première et une deuxième antennes (1, 2),
   - une étape de création par une unité de traitement numérique (3), à partir desdits premier et deuxième signaux électriques ($se_1$, $se_2$), d'au moins un signal numérique représentatif desdits rayonnements électromagnétiques ($r_1$, $r_2$) et destiné à être affiché par un afficheur en tant qu'image dudit corps ou objet, **caractérisé en ce que** l'étape de réception et de transformation comprend une étape d'abaissement de la fréquence desdits signaux électriques ($se_1$, $se_2$), et **en ce que** ledit procédé comprend en outre une étape de déconvolution desdits premier et deuxième signaux électriques ($se_1$, $se_2$) puis une étape de corrélation desdits premier et deuxième signaux électriques ($se_1$, $se_2$) déconvolués afin de former au moins un signal représentatif du rayonnement électromagnétique de l'intersection desdits premier et deuxième points ($P_1$, $P_2$) dudit corps ou objet.

7. Procédé selon la revendication 6, **caractérisé en ce que** les premier et deuxième signaux électriques sont convertis respectivement en un premier et un deuxième signal numérique, ($sn_1$, $sn_2$) par un module (17) de conversion, et **en ce que** l'étape de corrélation est mise en oeuvre sur lesdits signaux numériques ($sn_1$, $sn_2$).

8. Procédé selon la revendication 7, **caractérisé en ce que** l'étape de corrélation comprend :

- au moins une étape de calcul, à partir des premier et deuxième signaux numériques (sn$_1$, sn$_2$), d'au moins un signal numérique de corrélation représentatif du rayonnement électromagnétique de l'intersection des premier et deuxième points (P$_1$, P$_2$) du corps ou objet,

- au moins une étape de création par calcul d'au moins un troisième signal numérique représentatif du rayonnement électromagnétique d'une zone voisine du premier et/ou deuxième points (P$_1$, P$_2$),

- au moins une étape de calcul, à partir d'une part du premier et/ou du deuxième signal numérique et d'autre part du troisième signal numérique, d'au moins un signal numérique de corrélation représentatif du rayonnement électromagnétique de l'intersection du premier et/ou du deuxième points (P$_1$, P$_2$) du corps ou objet avec ladite zone voisine.

9. Procédé selon la revendication 8, **caractérisé en ce que** l'étape de création par calcul du troisième signal numérique représentatif du rayonnement électromagnétique de la zone voisine du premier et/ou deuxième points (P$_1$, P$_2$) comprend une étape de décalage temporel ou de déphasage du premier et/ou deuxième signal numérique (sn$_1$, sn$_2$).

10. Procédé selon l'une quelconque des revendications 8 et 9, **caractérisé en ce qu'**il comprend une étape de calcul de la différence entre d'une part le signal numérique de corrélation représentatif du rayonnement électromagnétique de l'intersection des premier et deuxième points (P$_1$, P$_2$) du corps ou objet, et d'autre part le signal numérique de corrélation représentatif du rayonnement électromagnétique de l'intersection du premier et/ou du deuxième points (P$_1$, P$_2$) du corps ou objet avec ladite zone voisine.

11. Procédé selon la revendication 6, **caractérisé en ce que** l'étape de corrélation est mise en oeuvre directement sur les premier et deuxième signaux électriques (se$_1$, se$_2$), et **en ce qu'**elle génère au moins un signal électrique de sortie qui est converti en au moins un signal numérique (sn$_1$) par un module (17) de conversion en vue d'un traitement par l'unité de traitement (3).

**Patentansprüche**

1. Tragbare radiometrische Bildgebungseinrichtung, umfassend:

- mindestens eine erste und eine zweite Empfangsantenne (1, 2), die geeignet sind, elektromagnetische Strahlungen (r$_1$, r$_2$) von einem ersten bzw. einem zweiten Punkt (P$_1$, P$_2$) eines Körpers oder eines Objekts zu erfassen und sie in ein erstes bzw. ein zweites Signal (s$_1$, s$_2$) umzuformen, die für diese Strahlungen (r$_1$, r$_2$) repräsentativ sind,

- mindestens eine erstes und ein zweites Empfangsmodul (5, 6), die mit der ersten bzw. zweiten Antenne (1, 2) verbunden und geeignet sind, das erste bzw. zweite Signal (s$_1$, s$_2$), die für die Strahlungen (r$_1$, r$_2$) repräsentativ sind, zu empfangen und sie in ein erstes bzw. zweites elektrisches Signal (se$_1$, se$_2$) umzuformen,

- eine digitale Verarbeitungseinheit (3), die geeignet ist, aus dem ersten und dem zweiten elektrischen Signal (se$_1$, se$_2$) mindestens ein digitales Signal zu erzeugen, das für die elektromagnetischen Strahlungen repräsentativ und dazu bestimmt ist, von einem Anzeigegerät als Bild des Körpers oder Objekts angezeigt zu werden, **dadurch gekennzeichnet, dass** das erste und das zweite Empfangsmodul (5, 6) ein Frequenzminderungsmodul (12) umfassen, und dass die Einrichtung ferner umfasst:

- mindestens ein Entfaltungsmodul, das geeignet ist, das erste und das zweite elektrische Signal (se$_1$, se$_2$) am Ausgang des ersten bzw. des zweiten Empfangsmoduls (5, 6) zu entfalten,

- ein Korrelationsmodul (4), das geeignet ist, das erste und das zweite entfaltete elektrische Signal (se$_1$, se$_2$) zu korrelieren, um mindestens ein Signal zu bilden, das für die elektromagnetische Strahlung des Schnittpunktes der ersten und zweiten Punkte (P$_1$, P$_2$) des Körpers oder Objekts repräsentativ ist.

2. Einrichtung nach Anspruch 1, **dadurch gekennzeichnet, dass** das erste und/oder das zweite Empfangsmodul (5, 6) ein Übergangsmodul (7) aufweisen, umfassend vorzugsweise eine Geräuschinjektionsdiode (8), die an einen Koppler (9) angeschlossen ist, wobei dieser Koppler (9) vorzugsweise an einen geräuscharmen Verstärker (10) angeschlossen ist.

3. Einrichtung nach einem der Ansprüche 1 und 2, **dadurch gekennzeichnet, dass** die Frequenzminderungsmodule (12) einen Millimetermischer (13) und einen geräuscharmen Niederfrequenzverstärker (14) umfassen.

4. Einrichtung nach einem der Ansprüche 1 bis 3, **dadurch gekennzeichnet, dass** die Empfangsmodule (5, 6) und die digitale Verarbeitungseinheit (3) auf einem selben Halbleiterchip angeordnet sind.

**5.** Einrichtung nach einem der Ansprüche 1 bis 4, **dadurch gekennzeichnet, dass** die Einrichtung ein Modul (17) zur Konversion des ersten und zweiten elektrischen Signals (se$_1$, se$_2$) in ein erstes bzw. ein zweites digitales Signal (sn$_1$, sn$_2$) umfasst, und dass das Korrelationsmodul (4) in digitales Korrelationsmodul (4) der digitalen Signale (sn$_1$, sn$_2$) ist, das vorzugsweise in die Verarbeitungseinheit (3) integriert ist.

**6.** Radiometrisches Bildgebungsverfahren, umfassend:

- einen Schritt des Empfangs und der Umwandlung in ein erstes und zweites elektrisches Signal (se$_1$, se$_2$) durch mindestens ein erstes und ein zweites Empfangsmodul (5, 6) eines ersten und eines zweiten Signals (s$_1$, s$_2$), die für Strahlungen (r$_1$, r$_2$) eines ersten und eines zweiten Punktes (P$_1$, P$_2$) eines Körpers oder Objekts repräsentativ sind, die von einer ersten und einer zweiten Antenne (1, 2) erfasst werden,
- einen Schritt der Erzeugung durch die digitale Verarbeitungseinheit (3) aus dem ersten und dem zweiten elektrischen Signal (se$_1$, se$_2$) mindestens eines digitalen Signals, das für die elektromagnetischen Strahlungen (r$_1$, r$_2$) repräsentativ und dazu bestimmt ist, durch ein Anzeigegerät als Bild des Körpers oder Objekts angezeigt zu werden,
**dadurch gekennzeichnet, dass** der Schritt des Empfangs und der Umwandlung einen Schritt der Minderung der Frequenz der elektrischen Signale (se$_1$, se$_2$) umfasst, und dass das Verfahren ferner einen Schritt der Entfaltung des ersten und zweiten elektrischen Signals (se$_1$, se$_2$) und dann einen Schritt der Korrelation des ersten und zweiten entfalteten elektrischen Signals (se$_1$, se$_2$) umfasst, um mindestens ein Signal zu bilden, das für die elektromagnetische Strahlung des Schnittpunktes des ersten und des zweiten Punktes (P$_1$, P$_2$) des Körpers oder Objekts repräsentativ ist.

**7.** Verfahren nach Anspruch 6, **dadurch gekennzeichnet, dass** das erste und das zweite elektrische Signal in ein erstes bzw. ein zweites digitales Signal (sn$_1$, sn$_2$) durch ein Konversionsmodul (17) konvertiert werden, und dass der Korrelationsschritt an den digitalen Signalen (sn$_1$, sn$_2$) eingesetzt wird.

**8.** Verfahren nach Anspruch 7, **dadurch gekennzeichnet, dass** der Korrelationsschritt umfasst:

- mindestens einen Schritt der Berechnung aus dem ersten und dem zweiten digitalen Signal (sn$_1$, sn$_2$) mindestens eines digitalen Korrelationssignals, das für die elektromagnetische Strahlung des Schnittpunktes des ersten und zweiten Punktes (P$_1$, P$_2$) des Körpers oder Objekts repräsentativ ist,
- mindestens einen Schritt der Erzeugung mindestens eines dritten digitalen Signals durch Berechnung, das für die elektromagnetische Strahlung einer Zone nahe dem ersten und/oder zweiten Punkt (P$_1$, P$_2$) repräsentativ ist,
- mindestens einen Schritt der Berechnung aus einerseits dem ersten und/oder zweiten digitalen Signal und andererseits dem dritten digitalen Signal mindestens eines digitalen Korrelationssignals, das für die elektromagnetische Strahlung des Schnittpunktes des ersten und/oder des zweiten Punktes (P$_1$, P$_2$) des Körpers oder des Objekts mit der benachbarten Zone repräsentativ ist.

**9.** Verfahren nach Anspruch 8, **dadurch gekennzeichnet, dass** der Schritt der Erzeugung des dritten digitalen Signals durch Berechnung, das für die elektromagnetische Strahlung der Zone nahe dem ersten und/oder zweiten Punkt (P$_1$, P$_2$) repräsentativ ist, einen Schritt der zeitlichen Versetzung oder Phasenverschiebung des ersten und/oder zweiten digitalen Signals (sn$_1$, sn$_2$) umfasst.

**10.** Verfahren nach einem der Ansprüche 8 und 9, **dadurch gekennzeichnet, dass** es einen Schritt der Berechnung der Differenz zwischen einerseits dem digitalen Korrelationssignal, das für die elektromagnetische Strahlung des Schnittpunkte des ersten und zweiten Punktes (P$_1$, P$_2$) des Körpers oder Objekts repräsentativ ist, und andererseits dem digitalen Korrelationssignal, das für die elektromagnetische Strahlung des Schnittpunktes des ersten und/oder des zweiten Punktes (P$_1$, P$_2$) des Körpers oder Objekts mit der benachbarten Zone repräsentativ ist, umfasst.

**11.** Verfahren nach Anspruch 6, **dadurch gekennzeichnet, dass** der Korrelationsschritt direkt am ersten und zweiten elektrischen Signal (se$_1$, se$_2$) eingesetzt wird, und dass er mindestens ein elektrisches Ausgangssignal erzeugt, das in mindestens ein digitales Signal (sn$_1$) durch ein Konversionsmodul (17) für eine Verarbeitung durch die Verarbeitungseinheit (3) konvertiert wird.

**Claims**

1. A portable radiometric imaging device comprising:

at least first and second receiver antennas (1, 2) adapted to pickup electromagnetic radiation ($r_1$, $r_2$) from first and second parts (P1, P2) of a body or an article and to convert them into first and second signals ($s_1$, $s_2$) representative of said radiation ($r_1$, $r_2$) ;
at least first and second receiver modules (5, 6) associated with said first and second antennas (1, 2) and adapted to receive said first and second signals ($s_1$, $s_2$) representative of said radiation ($r_1$, $r_2$) and to convert them into first and second electrical signals ($se_1$, $se_2$) ; and
. a digital processor unit (3) adapted to create, from said first and second electrical signals ($se_1$, $se_2$), at least one digital signal representative of said electromagnetic radiation to be displayed on a display as an image of said body or article;

the device being **characterized in that** the first and the second receiver modules (5, 6) include a frequency reducer module (12), and **in that** the device further comprises:

. at least one deconvolution module adapted to deconvolve the first and second electrical signals ($se_1$, $se_2$) at the output from the first and second receiver module (5, 6);
. a correlator module (4) adapted to correlate said first and second deconvolved electrical signals ($se_1$, $se_2$) in order to form at least one signal representative of the electromagnetic radiation from the intersection of said first and second parts (P1, P2) of said body or article.

2. A device according to claim 1, **characterized in that** the first and/or second receiver module (5, 6) includes a transition module (7) preferably including a noise injector diode (8) connected to a coupler (9), said coupler (9) preferably being connected to a low-noise amplifier (10).

3. A device according to claim 1 or claim 2, **characterized in that** the frequency reducer modules (12) include a millimeter-band mixer (13) and a low-frequency low-noise amplifier (14).

4. A device according to any one of claims 1 to 3, **characterized in that** the receiver modules (5, 6) and the digital processor unit (3) are on the same semiconductor chip.

5. A device according to any one of claims 1 to 4, **characterized in that** the device includes a module (17) for converting the first and second electrical signals ($se_1$, $se_2$) into first and second digital signals ($sn_1$, $sn_2$) and **in that** the correlator module (4) is a module (4) for digital correlation of said digital signals ($sn_1$, $sn_2$) and is preferably incorporated in the processor unit (3).

6. A radiometric imaging method including:

a step of at least first and second receiver modules (5, 6) receiving and converting into first and second electrical signals ($se_1$, $se_2$) first and second signals ($s_1$, $s_2$) representative of radiation ($r_1$, $r_2$) from first and second parts (P1, P2) of a body or an article captured by first and second antennas (1, 2); and
a step of a digital processor unit (3) creating from said first and second electrical signals ($se_1$, $se_2$) at least one digital signal representative of said electromagnetic radiation ($r_1$, $r_2$) to be displayed on a display as an image of said body or article;
the method being **characterized in that** the receiving and conversion step comprises a step of reducing the frequency of said electrical signals ($se_1$, $se_2$), and **in that** said method further comprises a deconvolution step of deconvoluting said first and second electrical signals ($se_1$, $se_2$) and then a step of correlating said first and second deconvolved electrical signals ($se_1$, $se_2$) in order to form at least one signal representative of the electromagnetic radiation from the intersection of said first and second parts (P1, P2) of said body or article.

7. A method according to claim 6, **characterized in that** the first and second electrical signals are converted into first and second digital signals ($sn_1$, $sn_2$) by a converter module (17) and **in that** the correlation step is applied to said digital signals ($sn_1$, $sn_2$).

8. A method according to claim 7, **characterized in that** the correlation step includes:

at least one step of calculating from the first and second digital signals ($sn_1$, $sn_2$) at least one digital correlation signal representative of the electromagnetic radiation from the intersection of the first and second parts (P1, P2) of the body or article;

at least one step of creating by calculation at least one third digital signal representative of the electromagnetic radiation from an area neighboring the first and/or second parts (P1, P2); and

at least one step of calculating from the first and/or the second digital signal and from the third digital signal at least one digital correlation signal representative of the electromagnetic radiation from the intersection of the first and/or second parts (P1, P2) of the body or article with said adjoining area.

9. A method according to claim 8, **characterized in that** the step of creating by calculation the third digital signal representative of the electromagnetic radiation from the area adjoining the first and/or second parts (P1, P2) includes a step of time-shifting or phase-shifting the first and/or second digital signal ($sn_1$, $sn_2$).

10. A method according to claim 8 or claim 9, **characterized in that** it includes a step of calculating the difference between the digital correlation signal representative of the electromagnetic radiation from the intersection of the first and second parts (P1, P2) of the body or article and the digital correlation signal representative of the electromagnetic radiation from the intersection of the first and/or second parts (P1, P2) of the body or article with said adjoining area.

11. A method according to claim 6, **characterized in that** the correlation step is applied directly to the first and second electrical signals ($se_1$, $se_2$) and it generates at least one electrical output signal that is converted into at least one digital signal ($sn_1$) by a converter module (17) with a view to processing by the processor unit (3).

FIG.1A

FIG.1B

EP 2 425 222 B1

FIG.2A

FIG.2B

FIG.3

21

FIG.4A

FIG.4B

FIG.5

FIG.6A

FIG.6B

FIG.7

FRF (GHz)

FIG.8

Zoom Corrélation avant mélange
DetaT entre pixel 0.050ns

FIG.9

Zoom Corrélation après mélange et numérisé
DetaT entre pixel 0.050ns

FIG.10

**FIG.11**

**FIG.12**